# EUROPEAN PATENT APPLICATION

(11) **EP 2 555 540 A1**
(43) Date of publication of application: **06.02.2013**
(21) Application number: 12160843.4
(22) Date of filing: 22.03.2012
(51) Int. Cl.: H04N 21/485, H04N 21/434, H04N 21/81

(54) **Method for auto-detecting audio language name and television using the same**

(30) Priority: 04.08.2011 TW 100127790
(71) Applicant: HannStar Display Corp., Wugu Dist. New Taipei City 248 (TW)
(72) Inventor: Shih, Tsung-Mu, Yilan Country 262 (TW)
(74) Representative: advotec.

(57) **Abstract**

A method for auto-detecting an audio language name and a television using the same are disclosed. The method includes the steps of receiving a transport stream containing a first table, a second table, and a third table; determining whether the first table has a language descriptor column; if the first table has the language descriptor column, displaying a language name according to a value in the language descriptor column, otherwise determining whether the second table has the language descriptor column; and if the second table has the language descriptor column, displaying the language name according to the value in the language descriptor column, otherwise determining whether the third tables has the language descriptor column.

## Description

### CROSS-REFERENCE TO RELATED APPLICATION

This application claims the benefit of Taiwan Patent Application No. 100127790, filed on August 4, 2011, in the Taiwan Intellectual Property Office, the disclosure of which is incorporated herein in its entirety by reference.

### BACKGROUND OF THE INVENTION

### Field of the Invention

The present invention relates to a method for auto-detecting an audio language name, in particular to the better method for auto-detecting an audio language name to prevent mistakes of displaying the language name on a television.

### Description of the Related Art

Present existing American digital TV programs generally come with different kinds of audio outputs (such as English, Spanish, or French, etc), and most general digital televisions provide a press button such as a Multi Channel Television Sound (MTS) button for users to select an audio output of a different language.

MTS is a unique feature of a stereo dual-language broadcasting system of NTSC (National Television System Committee) developed for improving quality and diversity of television sound transmission. The MTS system further provides an originally non-existing compatibility for TV viewers using an older model of televisions to listen to sound of stereo mixed mono, just like the conversion of black and white televisions into color televisions. And the MTS system can process the sound of the televisions as a stereo and also provide a Second Audio Program (SAP) as a second-language broadcasting. Therefore, it greatly improves the presence of musical programs and theatrical programs and allows viewers speaking different languages to have a choice of tuning to another sound. The specification of MTS broadcasting systems was established at the end of 1984 by the Federal Communication Committee (FCC), so far only decades, but its applications in MTS system broadcasting television stations and their programs are numerous. Obviously, this system has its charm and effect.

Although televisions of existing brands come with a function of auto-detecting data of each channel of different digital channels and its language name, and the language name information (ISO 639 language descriptor column) of each audio is stored in various different tables in a transport stream of the frequency channel. ISO 639 is a set of standards by the International Organization for Standardization. At present, content providers of different frequency channels often store audio language name information into different tables, and there is no compulsory rule for regulating the audio language name information to be store in different tables simultaneously, so that existing branded televisions usually has errors or mistakes of detecting the language name and cause troubles to users on selecting an audio channel. Obviously, it is necessary to have a better detection mechanism to detect audio language name information.

### SUMMARY OF THE INVENTION

In view of the aforementioned problems, it is a primary objective of the present invention to provide a better method of auto-detecting an audio language name to prevent mistakes of displaying a language name on a television.

To achieve the aforementioned objective, the present invention provides a method for auto-detecting an audio language name, and the method comprises the steps of: receiving a transport stream, wherein the transport stream includes a first table and a second table; examining whether the first table has a language descriptor column; if the first table has the language descriptor column, then displaying a language name according to a value in the language descriptor column; if not, then examining whether the second table has the language descriptor column; and if the second table has the language descriptor column, then displaying the language name according to the value in the language descriptor column.

Wherein, the transport stream further includes a third table, and the method further comprises the steps of: examining whether the third table has the language descriptor column if the second table does not have the language descriptor column; and displaying the language name according to the value in the language descriptor column if the third table has the language descriptor column, or displaying the language name as "Unknown", if the third table does not have the language descriptor column.

Wherein, the method of auto-detecting an audio language name in accordance with the present invention further comprises the steps of: examining whether the first, second and third tables are updated; if yes, then sequentially re-examining the first, second and third tables.

To achieve the second objective, the present invention provides a television capable of auto-detecting an audio language name, and the television can carry out the following steps of: receiving a transport stream, wherein the transport stream includes a first table and a second table; examining whether the first table has a language descriptor column; if the first table has the language descriptor column, then displaying a language name according to a value in the language descriptor column; if not, then examining whether the second table has the language descriptor column; and if the second table has the language descriptor column, then displaying the language name according to the value in the language descriptor column.

Wherein, the transport stream includes a third table, and the television can further carry out the following steps of examining whether the third table has the language descriptor column if the second table does not have the language descriptor column; and if the third table has the language descriptor column, then display the language name according to the value in the language descriptor column, or else display the language name as "Unknown".

Wherein, the television can carry out the method that further comprises the steps of examining whether the first, second and third tables are updated; if yes, then re-examining the first, second and third tables sequentially.

Some of the other objectives and/or advantages of the present invention are described below or learned in the practical operation of preferred embodiments.

### BRIEF DESCRIPTION OF THE DRAWING

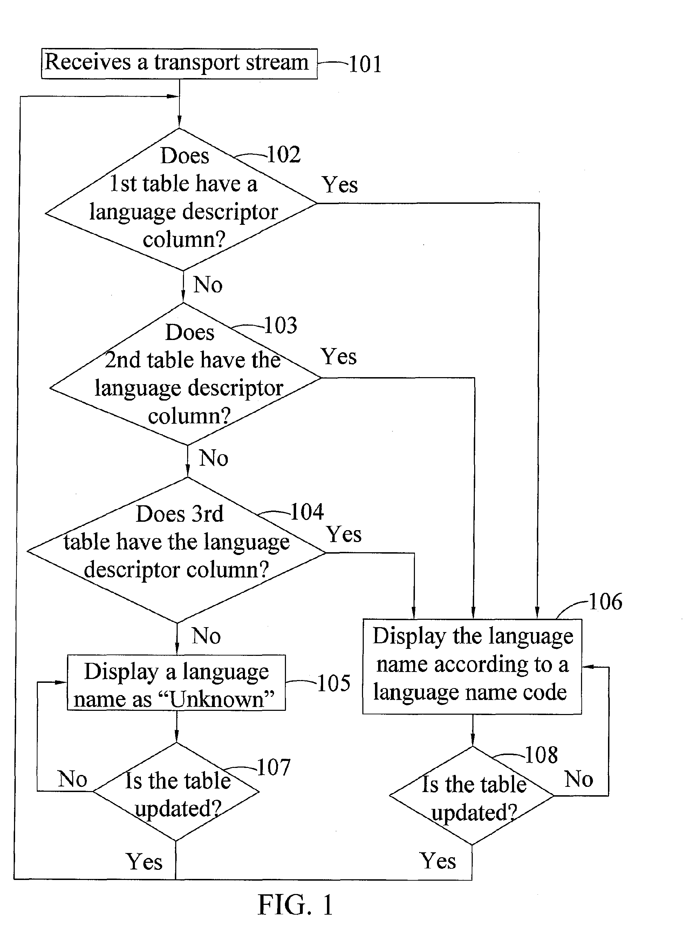

**FIG. 1** is a flow chart of a method for auto-detecting an audio language name in accordance with a preferred embodiment of the present invention.

### DETAILED DESCRIPTION OF THE PREFERRED EMBODIMENTS

FIG. 1 is a flow chart of a method for auto-detecting an audio language name in accordance with a preferred embodiment of the present invention applied to a digital television of an ATSC (Advanced Television Systems Committee) specification.

Firstly, in Step 101, a digital television receives a transport stream (TS) of a certain program, and the transport stream is a data flow defined according to the ITU-T Rec.H.222.0|ISO/IEC 13818-2 and ISO/IEC 13818-3 protocols and provided for transmitting and storing a single or a plurality of procedural code data under the situation with a possibility of having serious errors. The possible errors include bit errors or packet loss. The transport stream is composed of a single or more programs, and each program is composed of one or more elementary streams and some other streams including video streams, audio streams, program specific information streams and other data packets. Wherein, the program specific information streams include multiple tables such as a program association table, a program map table and a conditional access table. Wherein, the program map table includes information of a program, and such information includes a program number and lists the elementary streams. Moreover, according to the ATSC standard, the transport stream can further include a virtual channel table and an event information table, wherein the virtual channel table lists the attributes of a virtual channel in a transport stream, including transport stream identification data, a channel code, and a short title of the channel, etc. The event information table includes information such as a caption and a starting time of an event of a certain defined virtual channel. The most classical example of such event is a television program. Regardless of the program map table, virtual channel table and event information table, the audio language name information used in the current received program may be included.

Then, in Step 102, the virtual channel table is examined to check whether it has a language descriptor column. The value in the language descriptor column can be a language name code defined by the ISO 639 standard, which uses 2 to 4 English alphabets to indicate a language such as en for English and zh for Chinese. If the virtual channel table has the language descriptor column, then a language name will be displayed according to the value in the language descriptor column (which is the language name code defined by the ISO 639 standard) in Step 106, or else Step 103 will be executed.

In Step 103, the program map table is examined to check whether it has a language descriptor column. Similarly, the value in the language descriptor column can be a language name code defined by the ISO 639 standard. If the program map table has the language descriptor column, then the language name will be displayed according to the value in the language descriptor column (which is the language name code defined by the ISO 639 standard) in Step 106, or else Step 104 will be executed.

In Step 104, the event information table is examined to check whether it has language a descriptor column. Similarly, a value in the language descriptor column can be a language name code defined by the ISO 639 standard. If the event information table has the language descriptor column, then the language name will be displayed according to the value in the language descriptor column (which is the language name code defined by the ISO 639 standard) in Step 106, or else Step 107 will be executed.

In Step 105, since no information of the language name is detected, therefore the language name related information is displayed as "Unknown" on a screen.

In addition, since the program information may be updated while the program is being played, so that related tables may be updated. It is necessary to perform the auto-detection again when the tables are updated. Although no information of any language name is detected in Step 105, yet Step 107 will continue examining whether the virtual channel table, program map table and event information table are updated. If yes, then go back to Step 102 to reexamine language name information in the virtual channel table, program map table and event information table sequentially. Similarly, if the information of the language name is detected in Step 106, yet Step 108 will continue examining whether the virtual channel table, program map table and event information table are updated. If yes, then go back to Step 102 to reexamine language name information in the virtual channel table, program map table and event information table sequentially, so as to maintain the accuracy of the program audio language name.

In summation of the description above, the present invention provides a better method of auto-detecting an audio language name. It detects the transport stream's three tables (the virtual channel table, program map table, and event information table) which may include the audio language name information sequentially, so that the language name data can be retrieved accurately and displayed to prevent errors of only detecting specific tables.

While particular embodiments of the present invention have been shown and described, it will be obvious to those skilled in the art that, based upon the teachings herein, changes and modifications may be made without departing from this invention and its broader aspects. Therefore, the appended claims are intended to encompass within their scope of all such changes and modifications as are within the true spirit and scope of the exemplary embodiment(s) of the present invention.

## Claims

1. A method for auto-detecting an audio language name, comprising the steps of:
receiving a transport stream, wherein the transport stream includes a first table and a second table;
examining whether the first table has a language descriptor column;
if the first table has the language descriptor column, then displaying a language name according to a value in the language descriptor column or else examining whether the second table has the language descriptor column; and
if the second table has the language descriptor column, then displaying the language name according to the value in the language descriptor column.

2. The method for auto-detecting an audio language name of claim 1, wherein the transport stream includes a third table, and the method further comprising the steps of
examining whether the third table has the language descriptor column, if the second table does not have the language descriptor column; and
if the third table has the language descriptor column, then displaying the language name according to the value in the language descriptor column, or else displaying the language name as "Unknown".

3. The method for auto-detecting an audio language name of claim 2, further comprising the step of:
examining whether the first, second and third tables are updated, if yes, then re-examining the first, second and third tables sequentially.

4. The method for auto-detecting an audio language name of one of claims 1 to 3, wherein the first table is a virtual channel table of an ATSC standard.

5. The method for auto-detecting an audio language name of one of claims 1 to 4, wherein the second table is a program map table.

6. The method for auto-detecting an audio language name of claim 2 or one of claims 3 to 5 in combination with claim 2, wherein the third table is an event information table of the ATSC standard.

7. The method for auto-detecting an audio language name of one of claims 1 to 6, wherein the value in the language descriptor column is a language name code of an ISO 639 standard.

8. A television capable of auto-detecting an audio language name by a method comprising the steps of:
receiving a transport stream, wherein the transport stream includes a first table and a second table;
examining whether the first table has a language descriptor column;
if the first table has the language descriptor column, then displaying a language name according to a value in the language descriptor column, or else examining whether the second table has the language descriptor column; and
if the second table has the language descriptor column, then displaying the language name according to the value in the language descriptor column.

9. The television capable of auto-detecting an audio language name of claim 8, wherein the transport stream has a third table, the television further carries out the step of:
examining whether the third table has the language descriptor column if the second table does not have the language descriptor column; and
if the third table has the language descriptor column, then displaying the language name according to the value in the language descriptor column, or else displaying the language name as "Unknown".

10. The television capable of auto-detecting an audio language name of claim 9, wherein the method further comprises the step of:
examining whether the first, second and third tables are updated, and if yes, then re-examining the first, second and third tables sequentially.

11. The television capable of auto-detecting an audio language name of one of claims 8 to 10, wherein the first table is a virtual channel table of an ATSC standard.

12. The television capable of auto-detecting an audio language name of one of claims 8 to 11, wherein the second table is a program map table.

13. The television capable of auto-detecting an audio language name of claim 9 or one of claims 10 to 12 in combination with claim 9, wherein the third table is an event information table of an ATSC standard.

14. The television capable of auto-detecting an audio language name of one of claims 8 to 13, wherein the value in the language descriptor column is a language name code of an ISO 639 standard.
